# EUROPÄISCHE PATENTANMELDUNG

(11) **EP 1 293 123 A1**
(43) Veröffentlichungstag der Anmeldung: **19.03.2003**
(21) Anmeldenummer: 02016596.5
(22) Anmeldetag: 25.07.2002
(51) Int. Cl.: A01N 37/20, A01N 37/12

(54) **Biozide Retardierungsformulierungen**

(30) Priorität: 14.09.2001 DE 10145529
(71) Anmelder: Creavis Gesellschaft für Technologie und Innovation mbH, 45772 Marl (DE)
(72) Erfinder: Ottersbach, Peter, Dr., 51570 Windeck (DE); Kossmann, Beate, Dr., 58091 Hagen (DE)

(57) **Zusammenfassung**

Die Erfindung betrifft biozide Retardierungsformulierungen durch Einarbeitung organischen Lösemittel in antimikrobielle Polymere.

## Beschreibung

Die Erfindung betrifft biozide Retardierungsformulierungen aus antimikrobiellen Polymeren, ein Verfahren zur Herstellung der Retardformulierungen und deren Verwendung.

Besiedlungen und Ausbreitungen von Bakterien auf Oberflächen von Rohrleitungen, Behältern oder Verpackungen sind im hohen Maße unerwünscht. Es bilden sich häufig Schleimschichten, die Mikrobenpopulationen extrem ansteigen lassen, die Wasser-, Getränke- und Lebensmittelqualitäten nachhaltig beeinträchtigen und sogar zum Verderben der Ware sowie zur gesundheitlichen Schädigung der Verbraucher führen können.

Aus allen Lebensbereichen, in denen Hygiene von Bedeutung ist, sind Bakterien fernzuhalten. Davon betroffen sind Textilien für den direkten Körperkontakt, insbesondere für den Intimbereich und für die Kranken- und Altenpflege. Außerdem sind Bakterien fernzuhalten von Möbel- und Geräteoberflächen in Pflegestationen, insbesondere im Bereich der Intensivpflege und der Kleinstkinder-Pflege, in Krankenhäusern, insbesondere in Räumen für medizinische Eingriffe und in Isolierstationen für kritische Infektionsfälle sowie in Toiletten.

Gegenwärtig werden Geräte, Oberflächen von Möbeln und Textilien gegen Bakterien im Bedarfsfall oder auch vorsorglich mit Chemikalien oder deren Lösungen sowie Mischungen behandelt, die als Desinfektionsmittel mehr oder weniger breit und massiv antimikrobiell wirken. Solche chemischen Mittel wirken unspezifisch, sind häufig selbst toxisch oder reizend oder bilden gesundheitlich bedenkliche Abbauprodukte. Häufig zeigen sich auch Unverträglichkeiten bei entsprechend sensibilisierten Personen.

Eine weitere Vorgehensweise gegen oberflächige Bakterienausbreitungen stellt die Einarbeitung antimikrobiell wirkender Substanzen in eine Matrix dar.

Daneben stellt auch die Vermeidung von Algenbewuchs auf Oberflächen eine immer bedeutsamere Herausforderung dar, da inzwischen viele Aussenflächen von Gebäuden mit Kunststoffverkleidungen ausgestattet sind, die besonders leicht veralgen. Neben dem unerwünschten optischen Eindruck kann unter Umständen auch die Funktion entsprechender Bauteile vermindert werden. In diesem Zusammenhang ist z.B. an eine Veralgung von photovoltaisch funktionalen Flächen zu denken.

Eine weitere Form der mikrobiellen Verunreinigung, für die es bis heute ebenfalls keine technisch zufriedenstellende Lösung gibt, ist der Befall von Oberflächen mit Pilzen. So stellt z.B. der Befall von Fugen und Wänden in Feuchträumen mit Aspergillus niger neben dem beeinträchtigten optischen auch einen ernstzunehmenden gesundheitsrelevanten Aspekt dar, da viele Menschen auf die von den Pilzen abgegebenen Stoffe allergisch reagieren, was bis hin zu schweren chronischen Atemwegserkrankungen führen kann.

Im Bereich der Seefahrt stellt das Fouling der Schiffsrümpfe eine ökonomisch relevante Einflußgröße dar, da mit dem Bewuchs verbundenen erhöhten Strömungswiderstand der Schiffe ein deutlicher Mehrverbrauch an Kraftstoff verbunden ist. Bis heute begegnet man solchen Problemen allgemein mit der Einarbeitung giftiger Schwermetalle oder anderer niedermolekularer Biozide in Antifoulingbeschichtungen, um die beschriebenen Probleme abzumildern. Zu diesem Zweck nimmt man die schädlichen Nebenwirkungen solcher Beschichtungen in Kauf, was sich aber angesichts der gestiegenen ökologischen Sensibilität der Gesellschaft als zunehmend problematisch herausstellt.

So offenbart z. B. die US-PS 4 532 269 ein Terpolymer aus Butylmethacrylat, Tributylzinnmethacrylat und tert.-Butylaminoethylmethacrylat. Dieses Copolymer wird als antimikrobieller Schiffsanstrich verwendet, wobei das hydrophile tert.-Butylaminoethylmethacrylat die langsame Erosion des Polymers fördert und so das hochtoxische Tributylzinnmethacrylat als antimikrobiellen Wirkstoff freisetzt.

In diesen Anwendungen ist das mit Aminomethacrylaten hergestellte Copolymer nur Matrix oder Trägersubstanz für zugesetzte mikrobizide Wirkstoffe, die aus dem Trägerstoff diffundieren oder migrieren können. Polymere dieser Art verlieren mehr oder weniger schnell ihre Wirkung, wenn an der Oberfläche die notwendige "minimale inhibitorische Konzentration" (MIK) nicht mehr erreicht wird.

Aus der europäischen Patentanmeldung 0 862 858 ist weiterhin bekannt, daß Copolymere von tert.-Butylaminoethylmethacrylat, einem Methacrylsäureester mit sekundärer Aminofunktion, inhärent mikrobizide Eigenschaften besitzen. Um unerwünschten Anpassungsvorgängen der mikrobiellen Lebensformen, gerade auch in Anbetracht der aus der Antibiotikaforschung bekannten Resistenzentwicklungen von Keimen, wirksam entgegenzutreten, müssen auch zukünftig Systeme auf Basis neuartiger Zusammensetzungen und verbesserter Wirksamkeit entwickelt werden.

Neben der Verwendung rein kontaktmikrobizider Formulierungen kann es aber unter Umständen auch erforderlich sein, weitere biozide Substanzen zuzusetzen. Dies ist unter anderem dann angebracht, wenn es sich bei den von Mikroben zu befreienden Systemen um Durchflußsysteme handelt, bei denen ein vollständiger und ausreichender Kontakt des mikrobiell belasteten Wassers nicht gewährleistet werden kann. Der Zusatz konventioneller niedermolekularer Biozide ist zwar prinzipiell möglich, erscheint aber auf Grund der beschriebenen okötoxikologischen Bedenken kontrainduziert.

Wasserlösliche, biozide Verbindungen sind bekannt.

So sind in DE 100 43 287 antimikrobielle Polymere mit einer Depotwirkung beschrieben, wobei die Depotwirkung auf einen wasserlöslichen Oligomerenanteil der Polymere beruht. Die wasserlöslichen Oligomere werden langsam aus dem Polymer herausgelaugt, so dass neben der kontaktmikrobiziden Wirkung eine biozide Wirkung in Lösung zu beobachten ist.

DE 100 43 258 offenbart ein Verfahren, mit dem diese wasserlöslichen, antimikrobiellen Oligomere hergestellt werden können.

DE 100 48 613 beschreibt ebenfalls wasserlösliche, antimikrobielle Oligomere, die durch Umsetzung mit Ketonen und/oder Aldehyden eine verbesserte mikrobizide Wirkung aufweisen.

Der vorliegenden Erfindung liegt daher die Aufgabe zugrunde Wege aufzuzeigen, die Kombinationen aus wasserunlöslichen, antimikrobiell wirksamen Polymeren und ökologisch unbedenklicheren als den beschriebenen konventionellen Bioziden gestatten. Bei diesen ökologisch unbedenklicheren Stoffen handelt es sich um partiell wasserlösliche Substanzen, damit eine ausreichende biologische Verfügbarkeit auch in Durchflußsystemen gewährleistet ist.

Es wurde nun überraschend gefunden, daß durch Plastifizierung antimikrobieller Polymere durch Zusatz von organischen Lösemitteln Systeme erhalten werden können, die den beschriebenen Anforderungen in nahezu idealer Weise entsprechen. Da diese Formulierungen sowohl im Herstellverfahren als auch nachträglich und bei Bedarf mehrfach und automatisiert erhalten bzw. regeneriert werden können, z. B. durch nachträgliche Imprägnierung mit organischen Lösungsmitteln lassen sich hierdurch ökonomisch und ökologisch gleichermaßen attraktive Verfahren zur Herstellung biozider Retardsysteme kreieren.

Gegenstand der vorliegenden Erfindung sind daher antimikrobielle Retardformulierungen enthaltend antimikrobielle Polymere, die aus mindestens einem der folgenden Monomere hergestellt werden:
Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2-Acryloyloxyethyl-4-benzoylbenzyldimethylammoniumbromid, 2-Methacryloyloxyethyl-4-benzoylbenzyldimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether, wobei die antimikrobiellen Retardformulierungen mindestens 0,5 Gew.-% eines organischen Lösungsmittels enthalten.

Weiterhin betrifft die Erfindung ein Verfahren zu der Herstellung der Formulierungen durch radikalische Polymerisation der o. g. Monomere unter Einarbeitung von mindestens 0,5 Gew.-% eines organischen Lösemittels.

Entsprechende antimikrobielle Retard-Beschichtungen können unmittelbar durch Auflösen antimikrobieller Polymere in einem oder mehreren organischen Lösemitteln, anschließenden Auftrag auf eine Oberfläche und gefolgt von einer unvollständigen Entfernung dieser Lösemittel durch einen anschließenden Trocknungsprozess, erhalten werden.

Die Wirkungsweise der Formulierungen ist nicht genau bekannt, es ist jedoch möglich, dass die zugesetzten Lösemittelmoleküle eine Plastifizierung der antimikrobiellen Polymere bewirken, was in Kombination mit der Gegenwart von Wasser zu einem Carriereffekt in Bezug auf diese Polymere führt und geringe Mengen antimikrobiellen Polymers in die wäßrige Phase freisetzt. Diese Freisetzung erfolgt kontinuierlich und fortwährend solange noch organisches Lösemittel in einer entsprechenden Konzentration gebunden ist.

Die Leachingrate der so behandelten antimikrobiellen Systeme wird im Allgemeinen durch das Vorhandensein hydrophiler funktioneller Gruppen in den Ausgangsmolekülen unterstützt. Da die wasserlöslichen Polymeranteile Teilmenge der antimikrobiellen Polymer sind, läßt sich so unmittelbar eine Retardformulierung dieser Systeme kreieren. Falls man diese Anteile für spezielle Anwendungen separieren möchte, kann man dieses durch Auslaugen der antimikrobiellen Polymere mit Wasser oder einer wässrigen Lösung und Abtrennung der wasserlöslichen Bestandteile durch Filtration, Dialyse oder im einfachsten Fall Dekantieren der wässrigen Phase erreichen.

Der Gehalt an organischem Lösemittel spielt eine entscheidende Rolle. Dieser liegt im Allgemeinen im Bereich von 0,5 bis 60 Gewichtsprozent, bevorzugt im Bereich von 0,5 bis 30 Gewichtsprozent, insbesondere im Bereich von 0,5 bis 10 Gewichtsprozent bezogen auf die Gesamtmasse an antimikrobiellem Polymer und organischem Lösemittel bzw. weiteren dem Polymer beigefügten Zusatzstoffen.

Als plastifizierendes organisches Lösemittel können nahezu alle organischen Lösemittel Verwendung finden, die in mehr als einem halben Gewichtsprozent von den antimikrobillen Polymeren aufgenommen werden. Hierzu zählen beispielsweise Alkohole, Ester, Ketone, Aldehyde, Ether, Acetate, Aromaten, Kohlenwasserstoffe, Halogenkohlenwasserstoffe und organische Säuren, insbesondere Methanol, Ethanol, Propanol, Butanol, Aceton, Methylethylketon, Butylacetat, Acetaldehyd, Ethylenglykol, Propylenglykol, THF, Diethylether, Dioxan, Toluol, n-Hexan, Cyclohexan, Cyclohexanol, Xylol, DMF, Essigsäure und Chloroform.

Neben den genannten Monomeren können bei der Herstellung der antimikrobiellen Polymere mindestens ein weiteres aliphatisch ungesättigtes Monomeres eingesetzt werden. Bevorzugte Monomere für diesen Zweck sind Acryl-, und/oder Methacrylverbindungen wie z. B. MMA, Styrol, Acrylamide, Acrylnitrile, Allylverbindungen, Vinylketone, Vinylacetat, Vinylester, Vinylether, Vinylessigsäure oder Acrylsäure

Molare Anteile des weiteren Monomeren von 1 bis 50 Mol-% bevorzugt 5 bis 20 Mol-% sind ohne Verluste der mikrobiellen Wirkung des antimikrobiellen Polymers möglich.

Die Einarbeitung des organischen Lösemittels kann durch Auflösen des antimikrobiellen Polymers in dem organischen Lösemittel und dessen unvollständiger Entfernung z. B. durch Abdampfen oder Erhitzen erfolgen.

Es ist auch möglich, das antimikrobielle Polymer und das Lösemittel in einem Extruder oder Kneter zu vermischen.

### Verwendung der modifizierten Polymersubstrate

Weitere Gegenstände der vorliegenden Erfindung sind die Verwendung der erfindungsgemäß hergestellten antimikrobiellen Beschichtungen zur Herstellung von antimikrobiell wirksamen Erzeugnissen und die so hergestellten Erzeugnisse als solche. Solche Erzeugnisse basieren vorzugsweise auf Polyamiden, Polyurethanen, Polyetherblockamiden, Polyesteramiden oder - imiden, PVC, Polyolefinen, Silikonen, Polysiloxanen, Polymethacrylat oder Polyterephthalaten, Metallen, Hölzern, Gläsern und Keramiken, die mit erfindungsgemäßen Polymeren beschichtete Oberflächen aufweisen.

Antimikrobiell wirksame Erzeugnisse dieser Art sind beispielsweise und insbesondere Maschinenteile für die Lebensmittelverarbeitung, Bauteile von Klimaanlagen, beschichtete Rohre, Halbzeuge, Bedachungen, Badezimmer- und Toilettenartikel, Küchenartikel, Komponenten von Sanitäreinrichtungen, Komponenten von Tierkäfigen - und behausungen, Spielwaren, Komponenten in Wassersystemen, Lebensmittelverpackungen, Bedienelemente (Touch Panel) von Geräten und Kontaktlinsen.

Die erfindungsgemäßen Beschichtungen können überall verwendet werden, wo es auf möglichst bakterienfreie, algen- und pilzfreie, d.h. mikrobizide Oberflächen oder Oberflächen mit Antihafteigenschaften ankommt. Verwendungsbeispiele für die erfindungsgemäßen Beschichtungen finden sich in den folgenden Bereichen:
- Marine: Schiffsrümpfe, Hafenanlagen, Bojen, Bohrplattformen, Ballastwassertanks
- Haus: Bedachungen, Keller, Wände, Fassaden, Gewächshäuser, Sonnenschutz, Gartenzäune, Holzschutz
- Sanitär: Öffentliche Toiletten, Badezimmer, Duschvorhänge, Toilettenartikel, Schwimmbad, Sauna, Fugen, Dichtmassen
- Lebensmittel: Maschinen, Küche, Küchenartikel, Schwämme, Spielwaren, Lebensmittelverpackungen, Milchverarbeitung, Trinkwassersysteme, Kosmetik
- Maschinenteile: Klimaanlagen, Ionentauscher, Brauchwasser, Solaranlagen, Wärmetauscher, Bioreaktoren, Membranen
- Medizintechnik: Kontaktlinsen, Windeln, Membranen, Implantate
- Gebrauchsgegenstände: Autositze, Kleidung (Strümpfe, Sportbekleidung) , Krankenhauseinrichtungen, Türgriffe, Telefonhörer, Öffentliche Verkehrsmittel, Tierkäfige, Registrierkassen, Teppichboden, Tapeten

Außerdem sind Gegenstände der vorliegenden Erfindung die Verwendung der mit erfindungsgemäßen Retard-Beschichtungen oder Verfahren hergestellten Hygieneerzeugnisse oder medizintechnische Artikel. Die obigen Ausführungen über bevorzugte Materialien gelten entsprechend. Solche Hygieneerzeugnisse sind beispielsweise Zahnbürsten, Toilettensitze, Kämme und Verpackungsmaterialien. Unter die Bezeichnung Hygieneartikel fallen auch andere Gegenstände, die u.U. mit vielen Menschen in Berührung kommen, wie Telefonhörer, Handläufe von Treppen, Tür- und Fenstergriffe sowie Haltegurte und -griffe in öffentlichen Verkehrsmitteln. Medizintechnische Artikeln sind z. B. Katheter, Schläuche, Abdeckfolien oder auch chirurgische Bestecke.

Weiterhin finden die erfindungsgemäßen Retard-Formulierungen als Biofoulinginhibitor, insbesondere in Kühlkreisläufen, Verwendung. Zur Vermeidung von Schäden an Kühlkreisläufen durch Algen- oder Bakterienbefall müssen diese häufig gereinigt bzw. entsprechend überdimensioniert gebaut werden. Die Zugabe von mikrobiziden Substanzen wie Formalin ist bei offenen Kühlsystemen, wie sie bei Kraftwerken oder chemischen Anlagen üblich sind, nicht möglich.

Andere mikrobizide Substanzen sind oft stark korrosiv oder schaumbildend, was einen Einsatz in solchen Systemen verhindert.

Dagegen ist möglich, erfindungsgemäße Retard-Formulierungen oder deren Blends mit weiteren Polymeren in fein dispergierter Form in das Brauchwasser einzuspeisen. Die Bakterien werden abgetötet und falls erforderlich, durch Abfiltrieren des dispergierten Polymeren/Blends aus dem System entfernt. Eine Ablagerung von Bakterien oder Algen an Anlagenteilen kann so wirksam verhindert werden.

Weitere Gegenstände der vorliegenden Erfindung sind daher Verfahren zur Entkeimung von Kühlwasserströmen, bei dem Kühlwasser antimikrobielle Retard-Formulierungen in dispergierter Form zugesetzt werden.

Die dispergierte Form der Retard-Formulierungen durch Vermahlen des Materials z. B. in einer Strahlmühle erhalten werden. Bevorzugt werden die so gewonnenen Partikel in einer Größenverteilung von 0,001 bis 3 mm (als Kugeldurchmesser) eingesetzt, so dass einerseits eine große Oberfläche zur Abtötung der Bakterien oder Algen zur Verfügung steht, andererseits da wo erforderlich, die Abtrennung vom Kühlwasser z. B. durch Filtrieren einfach möglich ist. Das Verfahren kann z. B. so ausgeübt werden, das kontinuierlich ein Teil (5-10 %) der eingesetzten Retard-Formulierunge aus dem System entfernt und durch eine entsprechende Menge an frischem Material ersetzt wird. Alternativ kann unter Kontrolle der Keimzahl des Wassers bei Bedarf weitere antimikrobielle Retard-Formulierung zugegeben werden. Als Einsatzmenge genügen - je nach Wasserqualität - 0,1-100 g antimikrobielle Polymer-Formulierung pro m³ Kühlwasser.

Zur weiteren Beschreibung der vorliegenden Erfindung werden die folgenden Beispiele gegeben, die die Erfindung weiter erläutern, nicht aber ihren Umfang begrenzen sollen, wie er in den Patentansprüchen dargelegt ist.

### Beispiel 1:

45 mL tert.-Butylaminoethylmethacrylat (Fa. Aldrich) und 230 mL Ethanol werden in einem Dreihalskolben vorgelegt und unter Argonzustrom auf 65 °C erhitzt. Danach werden 0,4 g Azobisisobutyronitril gelöst in 20 mL Ethanol unter Rühren langsam zugetropft. Das Gemisch wird auf 70 °C erhitzt und 6 Stunden bei dieser Temperatur gerührt. Nach Ablauf dieser Zeit wird der Reaktionsmischung das Lösemittel durch Destillation entzogen. Im Anschluß wird das Produkt für 24 Stunden bei 50 °C im Vakuum getrocknet.

### Beispiel 1a:

Das Reaktionsprodukt aus Beispiel 1 wird zermörsert und 24 Stunden mit 200 mL 37 °C warmen Wasser ausgelaugt. Der Überstand wird anschließend durch einen 0,2 Mikrometer Porenfilter filtriert. 2 mL dieser Lösung werden mit 20 mL einer Testkeimsuspension von Pseudomonas aeruginosa versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von 10⁷ Keime pro mL konstant geblieben.

### Beispiel 1b:

5 g des Produktes aus Beispiel 1 werden in 95 g Cyclohexan gelöst. Von dieser Lösung werden 20 mL in ein Becherglas gegeben. Das Lösemittel wird in einem Trockenschrank bei 35 °C über 48 Stunden hin so entfernt, dass ein Polymerfilm auf dem Boden des Becherglases verbleibt. Dieser Film wird 24 Stunden mit 200 mL 37 °C warmen Wasser ausgelaugt. 2 mL dieser Lösung werden mit 20 mL einer Testkeimsuspension von Pseudomonas aeruginosa versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von von 10⁷ auf 10³ Keime pro mL gesunken. Der Film wird über einen Zeitraum von 14 Tagen wie oben beschrieben jeweils für 24 Stunden mit 200 mL 37 °C warmen Wassers ausgelaugt, welches anschließend mikrobiologisch untersucht wird. Es findet sich in allen Bestimmungen eine Keimzahlabnahme von 4 bis 5 logarithmischen Stufen.

### Beispiel 1c:

5 g des Produktes aus Beispiel 1 werden in 95 g Cyclohexan gelöst. Von dieser Lösung werden 20 mL in ein Becherglas gegeben. Das Lösemittel wird in einem Trockenschrank bei 35 °C über 48 Stunden hin so entfernt, dass ein Polymerfilm auf dem Boden des Becherglases verbleibt. Im Anschluß wird der Film in einem Vakuumtrockenschrank bei 5 mbar und 50°C für 24 Stunden getrocknet. Dieser Film wird 24 Stunden mit 200 mL 37 °C warmen Wasser ausgelaugt. 2 mL dieser Lösung werden mit 20 mL einer Testkeimsuspension von Pseudomonas aeruginosa versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von 10⁷ Keime pro mL konstant geblieben.

### Beispiel 1d:

Der Polymerfilm aus Beispiel 1c wird mit 20 mL Cyclohexan versetzt. Das Lösemittel wird in einem Trockenschrank bei 35 °C über 48 Stunden hin so entfernt, dass ein Polymerfilm auf dem Boden des Becherglases verbleibt. Dieser Film wird 24 Stunden mit 200 mL 37 °C warmen Wasser ausgelaugt. 2 mL dieser Lösung werden mit 20 mL einer Testkeimsuspension von Pseudomonas aeruginosa versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von von 10⁷ auf 10³ Keime pro mL gesunken.

### Beispiel 1e:

20 mL einer Testkeimsuspension von Pseudomonas aeruginosa werden mit 0,5 mL Cyclohexan versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von 10⁷ Keime pro mL konstant geblieben.

### Beispiel 2:

40 mL Dimethylaminopropylmethacrylamid (Fa. Aldrich) und 200 mL Ethanol werden in einem Dreihalskolben vorgelegt und unter Argonzustrom auf 65 °C erhitzt. Danach werden 0,4 g Azobisisobutyronitril gelöst in 20 mL Ethanol unter Rühren langsam zugetropft. Das Gemisch wird auf 70 °C erhitzt und 6 Stunden bei dieser Temperatur gerührt. Nach Ablauf dieser Zeit wird der Reaktionsmischung das Lösemittel durch Destillation entzogen und für 24 Stunden bei 50 °C im Vakuum getrocknet. Das Produkt wird anschließend in 200 ml Aceton gelöst, danach wird der Reaktionsmischung das Lösemittel durch Destillation entzogen und für 24 Stunden bei 50 °C im Vakuum getrocknet. Das Reaktionsprodukt wird im Anschluß fein zermörsert.

### Beispiel 2a:

Das Reaktionsprodukt wird zermörsert und 24 Stunden mit 200 mL 37 °C warmen Wasser ausgelaugt. Der Überstand wird anschließend durch einen 0,2 Mikrometer Porenfilter filtriert. 2 mL dieser Lösung werden mit 20 mL einer Testkeimsuspension von Staphylococcus aureus versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von 10⁷ Keime pro mL konstant geblieben.

### Beispiel 2b:

5 g des Produktes aus Beispiel 2 werden in 95 g Cyclohexan gelöst. Von dieser Lösung werden 20 mL in ein Becherglas gegeben. Das Lösemittel wird in einem Trockenschrank bei 35 °C über 48 Stunden hin so entfernt, dass ein Polymerfilm auf dem Boden des Becherglases verbleibt. Dieser Film wird 24 Stunden mit 200 mL 37 °C warmen Wasser ausgelaugt. 2 mL dieser Lösung werden mit 20 mL einer Testkeimsuspension von Staphylococcus aureus versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von von 10⁷ auf 10⁴ Keime pro mL gesunken. Der Film wird über einen Zeitraum von 14 Tagen wie oben beschrieben jeweils für 24 Stunden mit 200 mL 37 °C warmen Wassers ausgelaugt, welches anschließend mikrobiologisch untersucht wird. Es findet sich in allen Bestimmungen eine Keimzahlabnahme von 3 bis 4 logarithmischen Stufen.

### Beispiel 2c:

5 g des Produktes aus Beispiel 2 werden in 95 g Cyclohexan gelöst. Von dieser Lösung werden 20 mL in ein Becherglas gegeben. Das Lösemittel wird in einem Trockenschrank bei 35 °C über 48 Stunden hin so entfernt, dass ein Polymerfilm auf dem Boden des Becherglases verbleibt. Im Anschluß wird der Film in einem Vakuumtrockenschrank bei 5 mbar und 50°C für 24 Stunden getrocknet. Dieser Film wird 24 Stunden mit 200 mL 37 °C warmen Wasser ausgelaugt. 2 mL dieser Lösung werden mit 20 mL einer Testkeimsuspension von Staphylococcus aureus versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von 10⁷ Keime pro mL konstant geblieben.

### Beispiel 2d:

Der Polymerfilm aus Beispiel 2c wird mit 20 mL Cyclohexan versetzt. Das Lösemittel wird in einem Trockenschrank bei 35 °C über 48 Stunden hin so entfernt, dass ein Polymerfilm auf dem Boden des Becherglases verbleibt. Dieser Film wird 24 Stunden mit 200 mL 37 °C warmen Wasser ausgelaugt. 2 mL dieser Lösung werden mit 20 mL einer Testkeimsuspension von Staphylococcus aureus versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von von 10⁷ auf 10³ Keime pro mL gesunken.

### Beispiel 3:

45 mL tert.-Butylaminoethylmethacrylat (Fa. Aldrich) und 230 mL Ethanol werden in einem Dreihalskolben vorgelegt und unter Argonzustrom auf 65 °C erhitzt. Danach werden 0,4 g Azobisisobutyronitril gelöst in 20 mL Ethanol unter Rühren langsam zugetropft. Das Gemisch wird auf 70 °C erhitzt und 6 Stunden bei dieser Temperatur gerührt. Nach Ablauf dieser Zeit wird der Reaktionsmischung das Lösemittel durch Destillation entzogen. Im Anschluß wird das Produkt für 24 Stunden bei 50 °C im Vakuum getrocknet.

### Beispiel 3a:

Das Reaktionsprodukt aus Beispiel 3 wird zermörsert und 24 Stunden mit 200 mL 37 °C warmen Wasser ausgelaugt. 2 mL dieser Lösung werden mit 20 mL einer Testkeimsuspension von Staphylococcus aureus versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von 10⁷ Keime pro mL konstant geblieben.

### Beispiel 3b:

5 g des Produktes aus Beispiel 3 werden in 95 g Ethanol gelöst. Von dieser Lösung werden 20 mL in ein Becherglas gegeben. Das Lösemittel wird in einem Trockenschrank bei 35 °C über 48 Stunden hin so entfernt, dass ein Polymerfilm auf dem Boden des Becherglases verbleibt. Dieser Film wird 24 Stunden mit 200 mL 37 °C warmen Wasser ausgelaugt. 2 mL dieser Lösung werden mit 20 mL einer Testkeimsuspension von Staphylococcus aureus versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von von 10⁷ auf 10³ Keime pro mL gesunken. Der Film wird über einen Zeitraum von 14 Tagen wie oben beschrieben jeweils für 24 Stunden mit 200 mL 37 °C warmen Wassers ausgelaugt, welches anschließend mikrobiologisch untersucht wird. Es findet sich in allen Bestimmungen eine Keimzahlabnahme von 3 bis 4 logarithmischen Stufen.

### Beispiel 3c:

5 g des Produktes aus Beispiel 3 werden in 95 g Ethanol gelöst. Von dieser Lösung werden 20 mL in ein Becherglas gegeben. Das Lösemittel wird in einem Trockenschrank bei 35 °C über 48 Stunden hin so entfernt, dass ein Polymerfilm auf dem Boden des Becherglases verbleibt. Im Anschluß wird der Film in einem Vakuumtrockenschrank bei 5 mbar und 50°C für 24 Stunden getrocknet. Dieser Film wird 24 Stunden mit 200 mL 37 °C warmen Wasser ausgelaugt. 2 mL dieser Lösung werden mit 20 mL einer Testkeimsuspension von Staphylococcus aureus versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von 10⁷ Keime pro mL konstant geblieben.

### Beispiel 3d:

Der Polymerfilm aus Beispiel 3c wird mit 20 mL Ethanol versetzt. Das Lösemittel wird in einem Trockenschrank bei 35 °C über 48 Stunden hin so entfernt, dass ein Polymerfilm auf dem Boden des Becherglases verbleibt. Dieser Film wird 24 Stunden mit 200 mL 37 °C warmen Wasser ausgelaugt. 2 mL dieser Lösung werden mit 20 mL einer Testkeimsuspension von Staphylococcus aureus versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von von 10⁷ auf 10⁴ Keime pro mL gesunken.

### Beispiel 3e:

20 mL einer Testkeimsuspension von Staphylococcus aureus werden mit 0,5 mL Ethanol versetzt und geschüttelt. Nach einer Kontaktzeit von 4 Stunden wird 1 mL der Testkeimsuspension entnommen, und die Keimzahl im Versuchsansatz bestimmt. Nach Ablauf dieser Zeit ist die Keimzahl von 10⁷ Keime pro mL konstant geblieben.

## Patentansprüche

1. Antimikrobielle Retardformulierungen, enthaltend antimikrobielle Polymere, die aus mindestens einem der folgenden Monomere hergestellt werden:
Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammoniumchlorid, 2-Methacryloyloxyethyltrimethylammoniumchlorid, 2- Acryloyloxyethyl-4-benzoylbenzyldimethylammoniumbromid, 2-Methacryloyloxyethyl-4-benzoylbenzyldimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether,
**dadurch gekennzeichnet,**
**dass** die antimikrobiellen Retardformulierungen mindestens 0,5 Gew.-% eines organischen Lösungsmittels enthalten.

2. Antimikrobielle Retardformulierungen nach Anspruch 1,
**dadurch gekennzeichnet,**
**dass** die organischen Lösemittel Alkohole, Ester, Ketone, Aldehyde, Ether, Acetate, Aromaten, Kohlenwasserstoffe, Halogenkohlenwasserstoffe und/oder organische Säuren sind.

3. Antimikrobielle Retardformulierungen nach Anspruch 1 oder 2,
**dadurch gekennzeichnet,**
**dass** die organischen Lösemittel Methanol, Ethanol, Propanol, Butanol, Aceton, Methylethylketon, Butylacetat, Acetaldehyd, Ethylenglykol, Propylenglykol, THF, Diethylether, Dioxan, Toluol, n-Hexan, Cyclohexan, Cyclohexanol, Xylol, DMF, Essigsäure und/oder Chloroform sind.

4. Antimikrobielle Retardformulierungen nach einem der Ansprüche 1 bis 3,
**dadurch gekennzeichnet,**
**dass** zur Herstellung der antimikrobiellen Polymere zusätzlich ein oder mehrere weitere aliphatisch ungesättigte Monomere eingesetzt werden.

5. Antimikrobielle Retardformulierungen nach Anspruch 4,
**dadurch gekennzeichnet,**
**dass** als weitere aliphatisch ungesättigte Monomere Acryl- und/oder Methacrylsäureverbindungen eingesetzt werden.

6. Verfahren zur Herstellung von antimikrobiellen Retardformulierungen durch radikalische Polymerisation von mindestens einem der Monomere ausgewählt aus der Gruppe Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammoniumchlorid, 2-Methacryloyloxyethyltrimethylammoniumchlorid, 2- Acryloyloxyethyl-4-benzoylbenzyldimethylammoniumbromid, 2- Methacryloyloxyethyl-4-benzoylbenzyldimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether und Einarbeitung von mindestens 0,5 Gew.-% eines organischen Lösemittels.

7. Verfahren nach Anspruch 6,
**dadurch gekennzeichnet,**
**dass** die wasserlöslichen Bestandteile des antimikrobiellen Polymers vor der Einarbeitung des organischen Lösemittel durch Auslaugen des antimikrobiellen Polymers mit Wasser oder einer wässrigen Lösung und anschließendes Abtrennen der wässrigen Phase entfernt werden.

8. Verfahren nach Anspruch 6 oder 7,
**dadurch gekennzeichnet,**
**dass** die Einarbeitung des organischen Lösemittels durch Auflösen des antimikrobiellen Polymers in dem organischen Lösemittel erfolgt.

9. Verfahren nach Anspruch 6 oder 7,
**dadurch gekennzeichnet,**
**dass** die Einarbeitung des organischen Lösemittels in einem Extruder oder Kneter erfolgt.

10. Verfahren nach einem der Ansprüche 6 bis 9,
**dadurch gekennzeichnet,**
**dass** bei der Polymerisation zur Herstellung des antimikrobiellen Polymeren zusätzlich mindestens ein weiteres aliphatisch ungesättigtes Monomeres eingesetzt wird.

11. Verfahren nach Anspruch 10,
**dadurch gekennzeichnet,**
**dass** als weiteres aliphatisch ungesättigtes Monomer Acryl- und/oder Methacrylsäureverbindungen eingesetzt werden.

12. Verwendung der amtimikrobiellen Retardformulierungen gemäß einem der Ansprüche 1 bis 5 zur Herstellung von Erzeugnissen mit einer antimikrobiellen Beschichtung aus dem Polymer.

13. Verwendung der antimikrobiellen Retardformulierungen gemäß einem der Ansprüche 1 bis 5 in Lacken, Schutzanstrichen und Beschichtungen.

14. Verfahren zur Entkeimung von Kühlwasserströmen,
**dadurch gekennzeichnet,**
**dass** dem Kühlwasser antimikrobielle Retardformulierungen gemäß einem der Ansprüche 1 bis 5 in dispergierter Form zugesetzt werden.
